(19) Europäisches Patentamt / European Patent Office / Office européen des brevets

(11) **EP 4 787 022 A1**

(12) **EUROPEAN PATENT APPLICATION**
published in accordance with Art. 153(4) EPC

(43) Date of publication:
05.08.2026 Bulletin 2026/32

(21) Application number: 24872989.9

(22) Date of filing: 26.09.2024

(51) International Patent Classification (IPC):
*G01S 17/894* (2020.01)  *G01S 17/931* (2020.01)
*G06V 20/56* (2022.01)  *G06T 7/60* (2017.01)

(52) Cooperative Patent Classification (CPC):
G01S 17/894; G01S 17/931; G06T 7/60;
G06V 20/56

(86) International application number:
PCT/KR2024/014630

(87) International publication number:
WO 2025/071281 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 KR 20230130665

(71) Applicant: LG Electronics Inc.
Yeongdeungpo-gu
Seoul 07336 (KR)

(72) Inventor: HUR, Hyejung
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57) A point cloud data decoding method according to embodiments may comprise the steps of: receiving a bitstream including point data; and decoding the point data. A point cloud data decoding/encoding method according to embodiments may comprise the steps of: encoding point cloud data; and transmitting a bitstream including the point cloud data.

FIG. 1

**Description**

**TECHNICAL FIELD**

Embodiments relate to a method and device for processing point cloud content.

**BACKGROUND**

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

**DISCLOSURE**

**Technical Problem**

Embodiments provide a device and method for efficiently processing point cloud data. Embodiments provide a point cloud data processing method and device for addressing latency and encoding/decoding complexity.

The technical scope of the embodiments is not limited to the aforementioned technical objects, and may be extended to other technical objects that may be inferred by those skilled in the art based on the entire contents disclosed herein.

**Technical Solution**

In one aspect of the present disclosure, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

**Advantageous Effects**

Devices and methods according to embodiments may process point cloud data with high efficiency.

The devices and methods according to the embodiments may provide a high-quality point cloud service.

The devices and methods according to the embodiments may provide point cloud content for providing general-purpose services such as a VR service and a self-driving service.

**BRIEF DESCRIPTION OF THE DRAWINGS**

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;

FIG. 2 is a block diagram illustrating a point cloud content providing operation according to embodiments;

FIG. 3 illustrates an exemplary point cloud encoder according to embodiments;

FIG. 4 shows an example of an octree and occupancy code according to embodiments;

FIG. 5 illustrates an example of point configuration in each LOD according to embodiments;

FIG. 6 illustrates an example of point configuration in each LOD according to embodiments;

FIG. 7 illustrates a point cloud decoder according to embodiments;

FIG. 8 illustrates a transmission device according to embodiments;

FIG. 9 illustrates a reception device according to embodiments;

FIG. 10 illustrates an exemplary structure operable in connection with point cloud data transmission/reception methods/devices according to embodiments;

FIG. 11 shows point cloud data according to embodiments;

FIG. 12 shows a normal vector data according to embodiments;

FIG. 13 shows road object split according to embodiments;

FIG. 14 shows a point cloud data encoding device according to embodiments;

FIG. 15 shows a point cloud data decoding device according to embodiments;

FIG. 16 illustrates a bitstream including point cloud data according to embodiments;

FIG. 17 shows a set of geometry parameters according to embodiments;

FIG. 18 shows a tile parameter set according to embodiments;

FIG. 19 illustrates a geometry slice header according to embodiments;

FIG. 20 illustrates a geometry prediction unit header according to embodiments;

FIG. 21 illustrates a point cloud data encoding method according to embodiments; and

FIG. 22 illustrates a point cloud data decoding method according to embodiments.

## BEST MODE

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

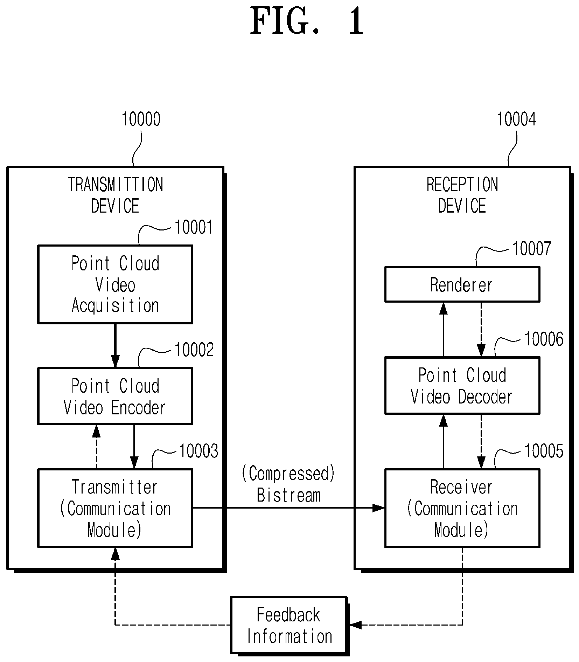

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

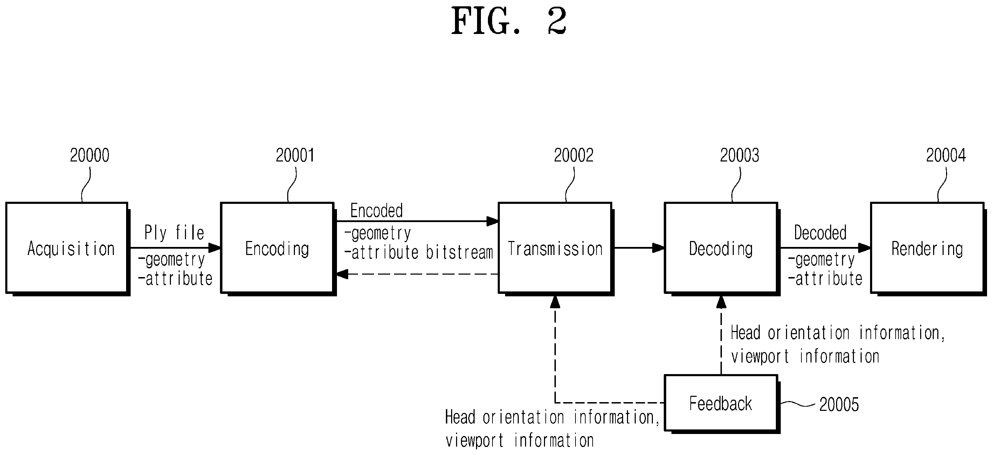

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

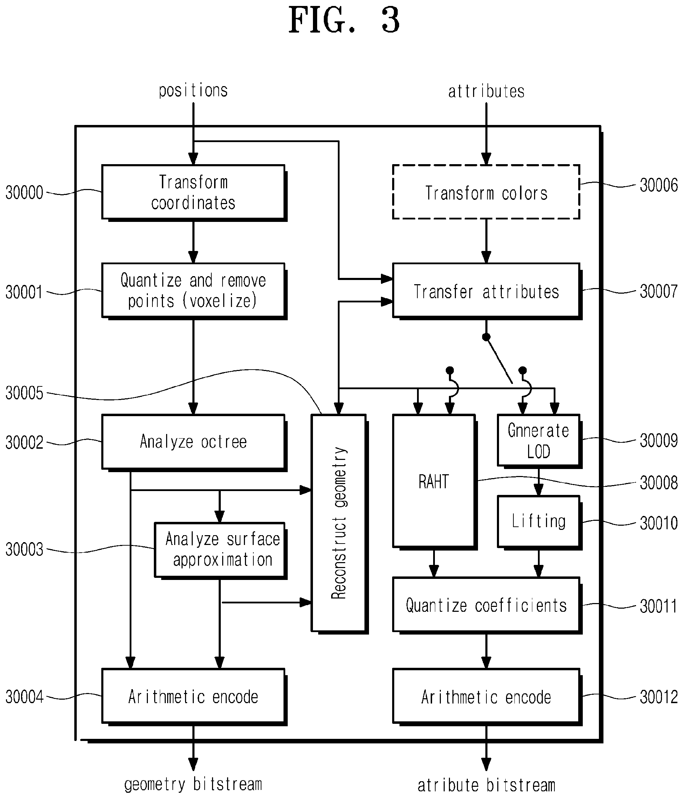

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

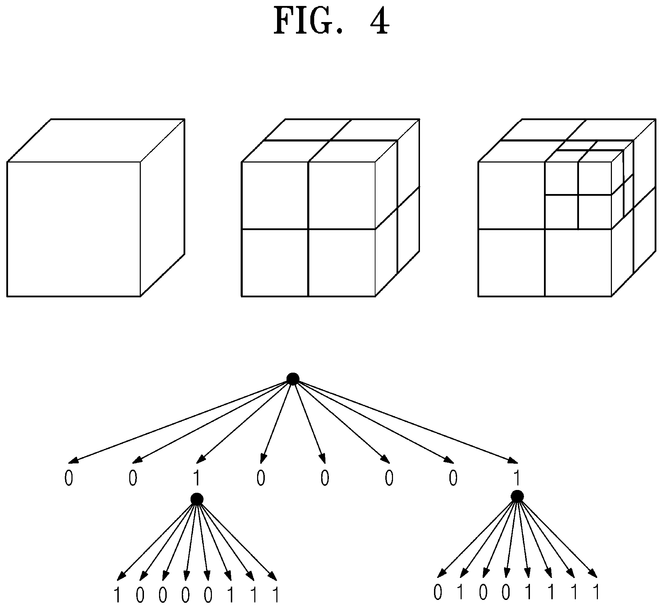

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d=Ceil(Log2(Max(x\_n^{int},y\_n^{int},z\_n^{in},n=1,\ldots,N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta x, \Delta y, \Delta z$) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{①} \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad \text{②} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad \text{③} \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table below

shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

```
n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)
```

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

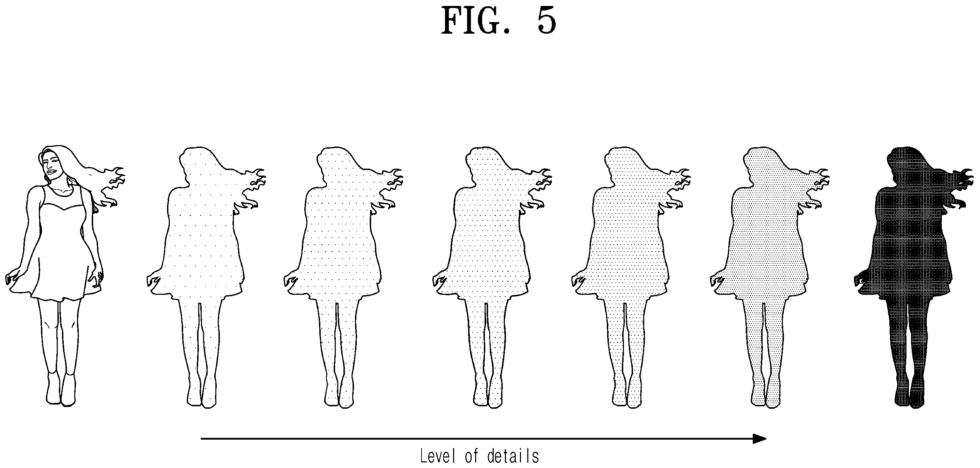

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

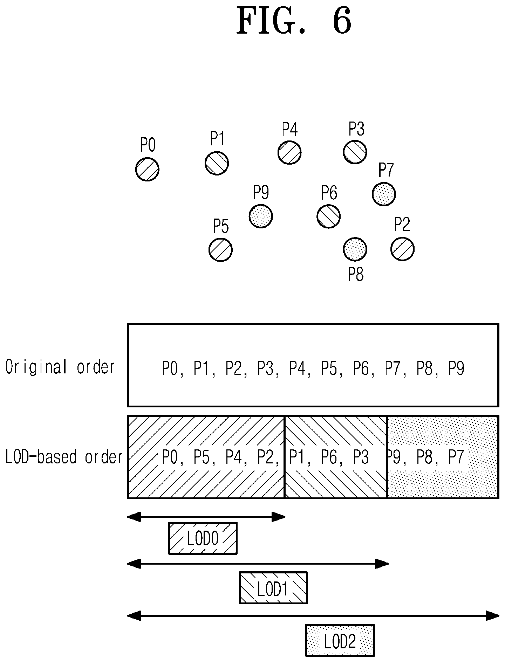

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

```
TABLE Attribute prediction residuals quantization pseudo code
int PCCQuantization(int value, int quantStep) {
if( value >=0) {
return floor(value / quantStep + 1.0 / 3.0);
} else {
return -floor(-value / quantStep + 1.0 / 3.0);
}
}
TABLE Attribute prediction residuals inverse quantization pseudo code
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level l. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are w1 = $w_{l_{2x,y,z}}$ and w2 = $w_{l_{2x+1,y,z}}$.

$$\begin{bmatrix} g_{l-1_{x,y,z}} \\ h_{l-1_{x,y,z}} \end{bmatrix} = T_{w1\,w2} \begin{bmatrix} g_{l_{2x,y,z}} \\ g_{l_{2x+1,y,z}} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (e.g., encoding by the arithmetic encoder 300012). The weights are calculated as $w_{l-1_{x,y,z}} = w_{l_{2x,y,z}} + w_{l_{2x+1,\,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\,w1001} \begin{bmatrix} g_{1_{0,0,0z}} \\ g_{1_{0,0,1}} \end{bmatrix}$$

The value of gDC is also quantized and subjected to entropy coding like the high-pass coefficients.

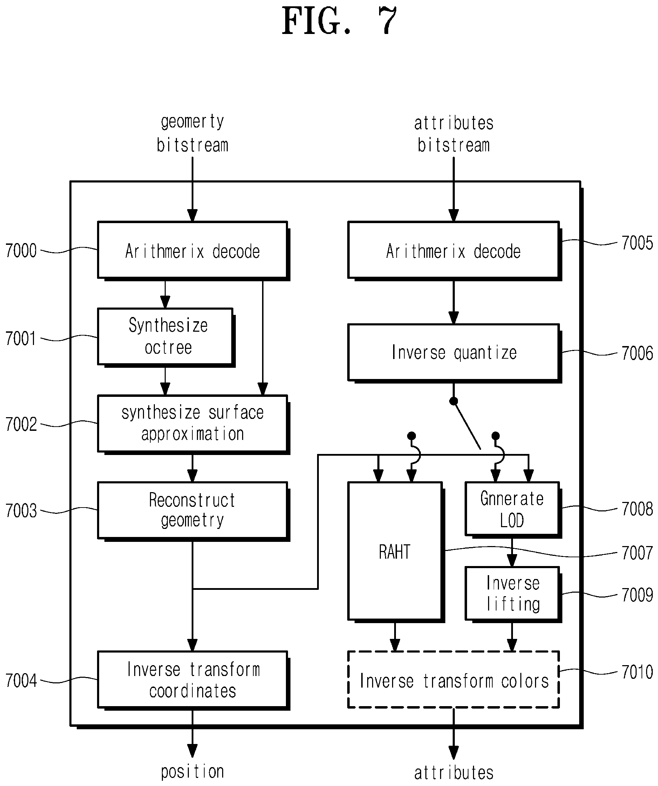

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

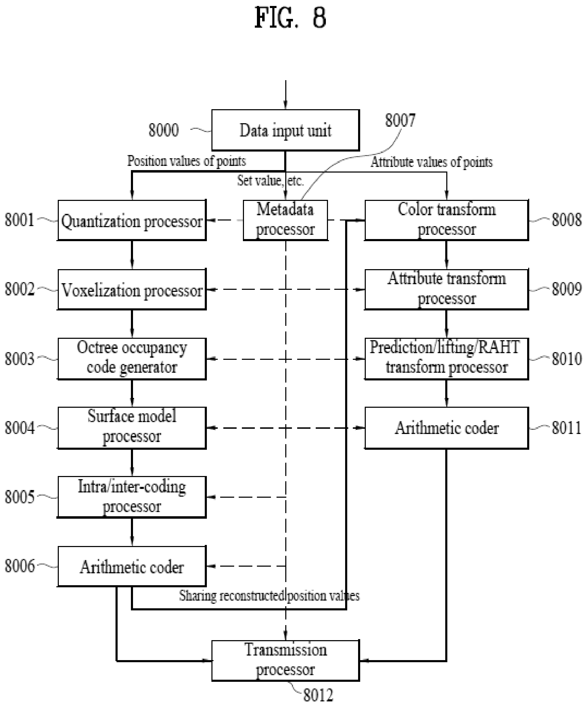

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

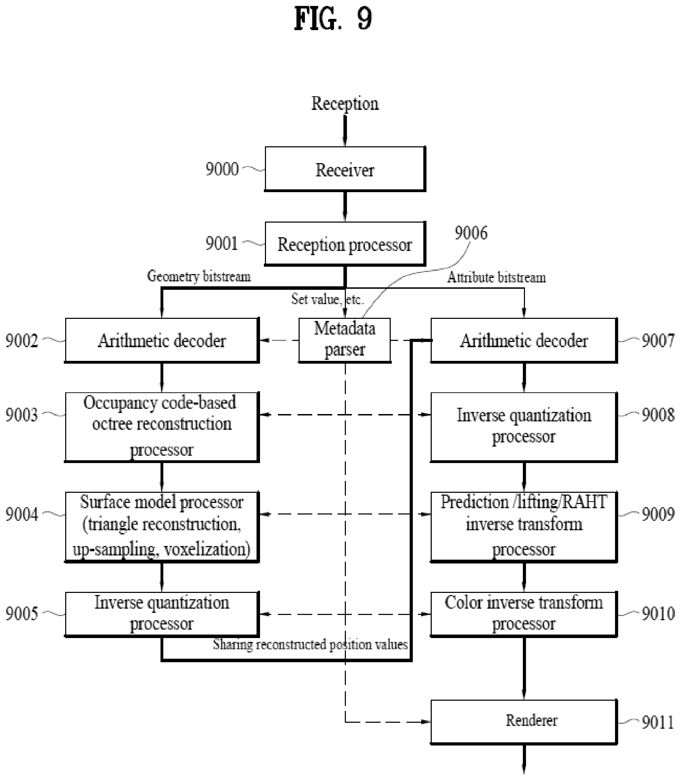

FIG. 9 illustrates a reception device according to embodiments.

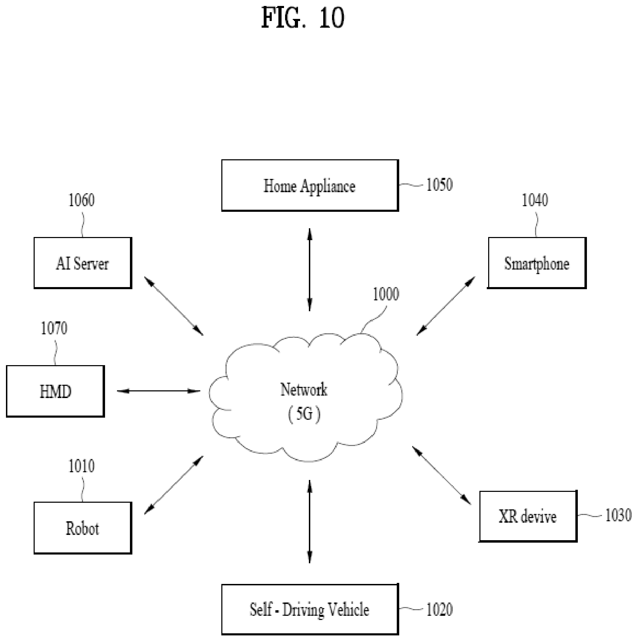

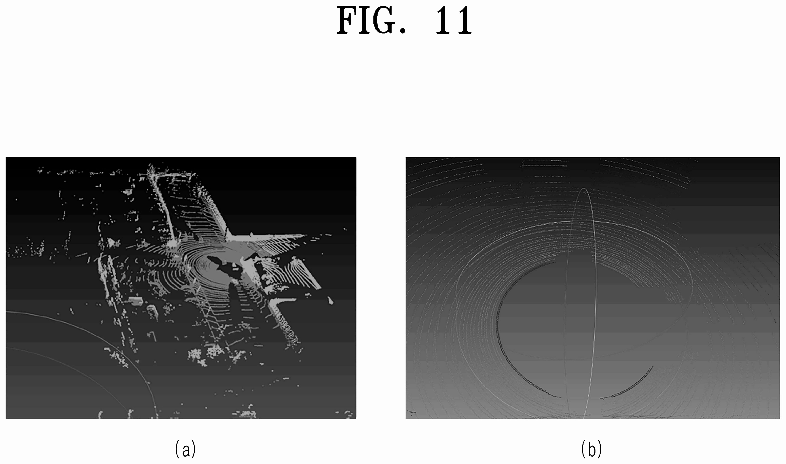

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

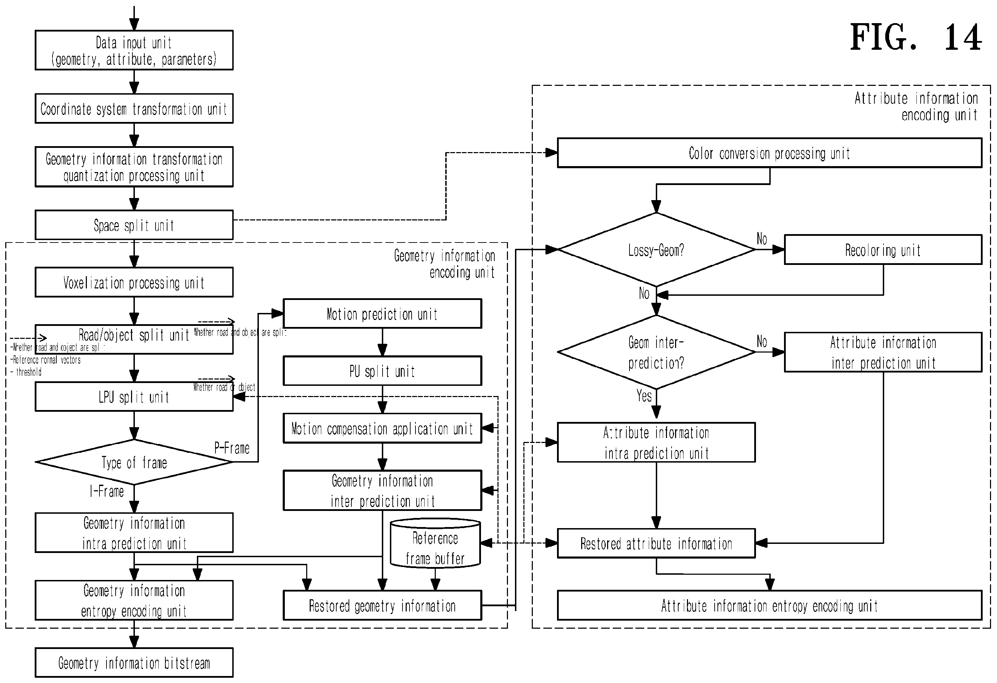

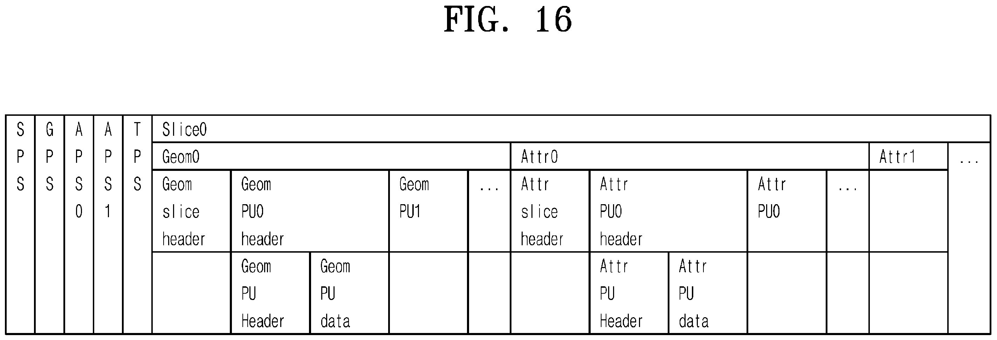

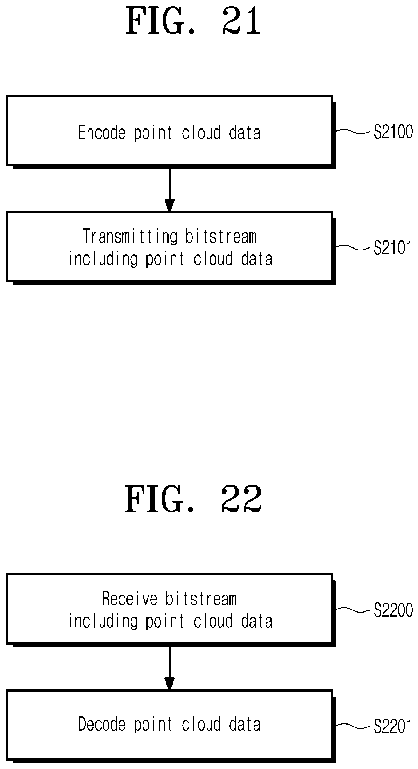

The point cloud data transmission method/device according to embodiments is interpreted as a term referring to the transmission device 10000, the point cloud video encoder 10002, and the transmitter 10003 of FIG. 1, the acquisition-encoding-transmission 20000-20001-20002 of FIG. 2, the encoders of FIGS. 3 and 8, each device of FIG. 10, object split-based encoding of FIGS. 11 to 13, the encoder of FIG. 14, bitstream generation including parameters of FIGS. 16 to 20, an encoding method of FIG. 21, and the like.

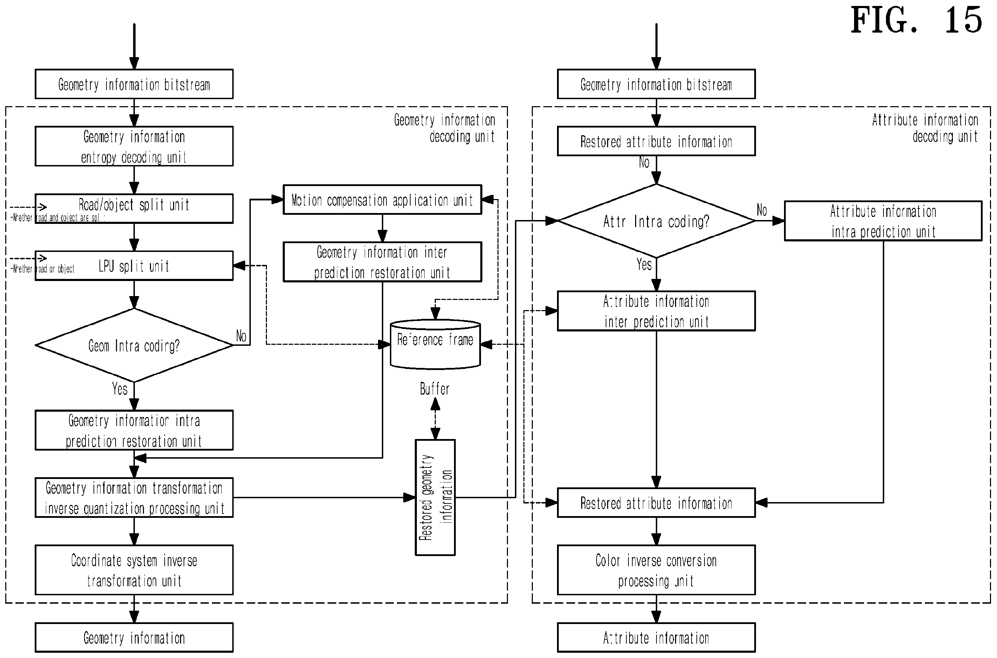

The point cloud data reception method/device according to embodiments is interpreted as a term referring to the reception device 10004, the receiver 10005, and the point cloud video decoder 10006 of FIG. 1, the transmission-decoding-rendering 20002-20003-20004 of FIG. 2, the decoder of FIG. 7, the reception device of FIG. 9, the device of FIG. 10, object split-based decoding of FIGS. 11 to 13, the decoder of FIG. 15, bitstream parsing including parameters of FIGS. 16 to 20, a decoding method of FIG. 22, and the like.

The point cloud data transmission/reception method/device according to embodiments may be referred to as the point cloud data encoding/decoding method/device according to embodiments, and may be abbreviated as the method/device according to embodiments.

In some embodiments, geometry data, geometry information, location information, and the like that constitute point cloud data are interpreted as having the same meaning. Attribute data, attribute information, attribute information, and the like that constitute point cloud data are interpreted as having the same meaning.

The method/device according to embodiments may include and perform a method to split road and objects with normal vector on point cloud captured by LiDAR.

The method according to embodiments includes a method of separating roads and objects to efficiently support inter prediction of point cloud contents captured by LiDAR equipment in a moving vehicle for efficient geometry compression of geometry-based point cloud compression (G-PCC) and applying inter prediction. For example, the method includes a road and object separation method using a normal vector value and a signaling method therefor.

Embodiments relate to a method for improving the compression efficiency of G-PCC for compressing 3D point cloud data. Hereinafter, the encoder and encoding device is referred to as an encoder, and the decoder and decoding device is referred to as a decoder.

A point cloud may include a set of points, and each point may have geometry information and attribute information. The geometry information is 3D position (XYZ) information, and the attribute information is color (RGB, YUV, or the like) or/and a reflectance value.

A G-PCC encoding process may split a point cloud into tiles according to region, and each tile may be split into slices for parallel processing. The G-PCC encoding process may include a process of compressing geometry for each slice unit and compressing attribute information based on reconstructed geometry (decoded geometry) with location information changed through compression.

The G-PCC decoding process may include a process of receiving a geometry bitstream and an attribute bitstream for each encoded slice unit, decoding the geometry, and decoding attribute information based on the geometry reconstructed through the decoding process.

Octree-based, predictive tree-based, or trisoup-based compression schemes may be used to compress geometry information.

Embodiments include a scheme of separating roads and objects by using a normal vector value to increase compression efficiency through inter prediction of content captured by LiDAR equipment on a moving vehicle.

FIG. 11 shows point cloud data according to embodiments.

In detail, (a) of FIG. 11 illustrates a phenomenon that occurs when a road and an object are split based on a height value. (b) of FIG. 11 shows an example of a road point captured by LiDAR.

Content captured from LiDAR equipment of a moving vehicle may include both a road and an object. When a road and an object are split based on a height value (e.g., z or y value), if there is a curve in the road, a partial region may be higher than the road height value, resulting in incorrect split, as shown in (a) of FIG. 11.

The characteristics of road and object points are different, and thus accurately splitting a road and an object may improve compression efficiency. The road may be captured in a consistent form similar to (b) of FIG. 11 even if a frame changes.

Point cloud frames continuously captured from the LiDAR equipment of a moving vehicle are always captured in the form of (b) of FIG. 11 if there are no object and only a road, and when the height of the center position of the road and the sensor is constant, and thus it may be difficult to recognize a motion that appears through the road points between consecutive frames, and applying the motion generated from the object to the road may be meaningless, or rather, it may have the opposite effect and increase a bitstream size, which may reduce the compression efficiency. Conversely, applying predicted motion to an object via the road may also result in inaccurate motion prediction, as the motion is likely not accurate. Therefore, a method is needed to separate a road and an object from point cloud frames continuously captured by the LiDAR equipment of a moving vehicle.

The method according to embodiments includes a road and object split method for efficiently supporting integrated compression with efficient inter prediction of content captured by LiDAR equipment in a moving vehicle.

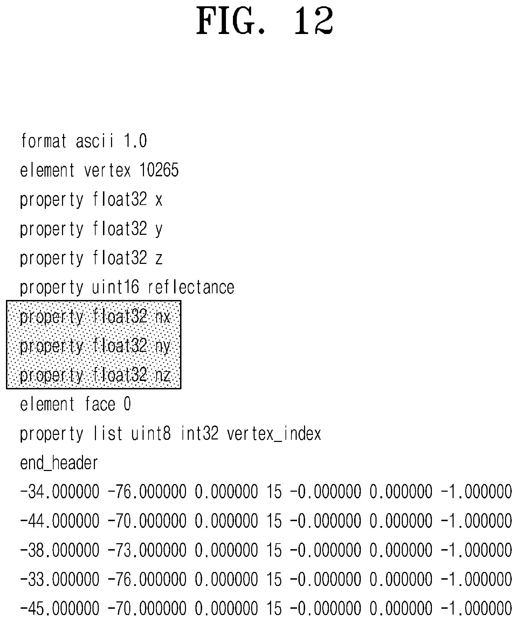

FIG. 12 shows a normal vector data according to embodiments.

The encoding method according to embodiments may separate a road and an object based on a normal vector value during the process of encoding point cloud data.

As in FIG. 12, there may be a case in which normal vector data is provided for content captured through the LiDAR equipment of a moving vehicle.

Attribute data (or attribute for short) of point cloud data according to embodiments may include color, opacity, reflectivity, normal vector, material identifier, frame number/index, and user-defined attribute.

The normal vector is attribute including three components representing a vector that is perpendicular to a surface tangent plane at an associated point. Identification of an axis of the normal vector is identical to identification of an STV axis for the coded point cloud geometry. The length of the normal vector does not need to be 1. The normal vector may be used when rendering a point cloud. The shape of the point may be modified depending on a difference between an incident light direction and the normal vector.

The method according to embodiments may generate normal vector data from points when normal vector data is not provided.

For example, the normal vector may be obtained using the following expression by calculating neighboring points of current point A and selecting two points (B, C) in a clockwise direction, and an average value of the obtained normal vectors may be configured as the normal vector of A.

$$dir = (B - A) \text{ cross-product } (C - A)$$

$$\text{normal vector} = dir / len(dir)$$

All normal vectors may be assumed to be normalized normal vectors.

For comparison with the normal vector, an axis corresponding to the height (altitude) axis may be input, and a threshold range may be input. For example, the Z (0, 0, -1) axis may be configured as a height axis orthogonal to the road of the content, and a threshold range value may be input, and in this case, when a z-axis value of a normal vector of a point is within the range value, the point may be split to a road, and when the z-axis value of the normal vector of the point is outside the range value, the point may be split to an object.

Alternatively, multiple reference axes may be configured in consideration of errors.

An axis index (Axis_idx) may be a height axis orthogonal to the road of the content and may be configured to 0 (=x-axis), 1 (=y-axis), or 2 (=z-axis). An axis value (Axis_value) is a normalized normal vector and may be configured to a value between -1 and 1.

For example, when axis_idx = 2 and axis_value = -1, axis_idx may represent the z-axis and axis_value may represent a direction of the axis. When the height axis orthogonal to the road of the content is represented as Z (0, 0, -1), axis_idx = 2 and axis_value = -1.

Point cloud data may include points, a cloud size may obtain the number of points belonging to the point cloud, and cloud normal (cloud.getNormal) may obtain the normal vector of the point corresponding to the point index.

The method according to embodiments may split a road and an object through the following algorithm.

```
for (node_idx=0; node_idx < cloud.size(); node_idx++) {
normal_vector = cloud.getNormal(node_idx);
if (axis_value < 0) {
if(normal_vector[axis_idx] < (axis_value + threshold)) Separate the corresponding point to a road
else Split the corresponding point to an object
} else {
if(normal_vector[axis_idx] > (axis_value - threshold) Separate the corresponding point to a road
else Split the corresponding point to an object
}

}
```

When the threshold (Threshold) is 0.2 and the axis value (Axis_value) is -1, all points with a normal value less than - 0.8 may be separated as roads. When the axis value (Axis_value) is 1, all points with a normal value greater than 0.8 may be separated into roads.

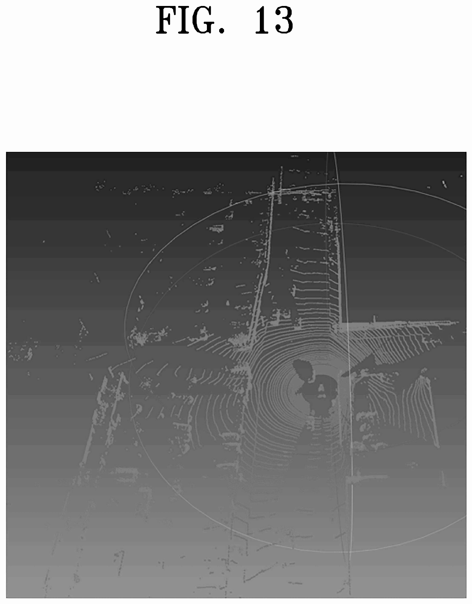

FIG. 13 shows road object split according to embodiments.

FIG. 13 shows an example of separating a road and an object by using a normal vector value. This is an example of applying a different method to the same content as in FIG. 11. FIG. 13 shows a result when a normal vector-based split method is applied to the content illustrated in FIG. 11. It may be seen that split errors, which occur when a region is split based on a value of the z-axis and the heights of portions of the road are partially different, have been corrected.

FIG. 14 shows a point cloud data encoding device according to embodiments.

FIG. 14 may correspond to the transmission device 10000, the point cloud video encoder 10002, and the transmission device 10000 of FIG. 1, the acquisition-encoding-transmission 20000-20001-20002 of FIG. 2, the encoder of FIGS. 3 and 8, each device of FIG. 10, the object split-based encoding of FIGS. 11 to 13, the encoder of FIG. 14, the bitstream generation including parameters of FIG. 16 to FIG. 20, the encoding method of FIG. 21, and the like.

Each component of FIG. 14 may correspond to hardware, software, a processor, and/or a combination thereof.

Input of the encoder is PCC data, and the PCC data may be encoded and output as a geometry information bitstream and an attribute information bitstream.

The geometry information encoding unit, which is an encoder of the point cloud data encoding device, may split a road and an object through the road/object split unit. The encoder of the point cloud data encoding device may perform intra geometry information coding based on the split points through an LPU split unit when a frame type is an I-frame. For example, in the case of a prediction tree-based geometry compression method, a prediction tree may be constructed separately between the split points.

The geometry information encoding unit, which is an encoder of the point cloud data encoding device, may split a road and an object through the road/object split unit. The encoder of the point cloud data encoding device may predict global motion through a motion prediction unit when a frame type is a P-frame through the LPU split unit, perform split on a region that needs to be split through a PU split unit, and predict local motion through a motion prediction unit. This process may continue until no further split is necessary or until a specified level is reached. Information about whether LPU/PU is split and/or information about predicted motion for each LPU/PU may be included as parameter information in a bitstream and signaled to a decoder.

The encoder of the point cloud data encoding device may determine through RDO whether to apply the predicted motion to the LPU/PU generated through a motion compensation application unit, and may apply the motion to a reference frame based on the determination. Information about whether to apply the predicted motion may be included as parameter information in the bitstream and signaled to the decoder.

The geometry information inter prediction unit may compress geometry information by using compensated points, and information related to inter prediction may be included as parameter information in a bitstream and signaled to the decoder.

The road/object split unit of the encoder of the point cloud data encoding device may parse information on whether road/object split is performed from the bitstream, and when the information on whether road/object split is performed is true, points may be split into roads and objects. Information about whether a road/object is split may be included in the bitstream (see FIGS. 16 to 20).

The road/object split unit of the encoder of the point cloud data encoding device may receive a reference normal vector value and a threshold value, and perform split into a road and an object by comparing the values with the normal vector values of points. For a detailed description of the split method, the description of the method of splitting roads and objects by using normal vector values described in FIG. 12 is referenced.

The LPU split unit of the encoder of the point cloud data encoding device may generate points classified in the road/object split unit into each LPU. Information indicating whether each LPU is a road or an object group may be included as parameter information in the bitstream and signaled to the decoder.

The LPU component is split into a road and an object, and thus the bitstream may be split into a bitstream for a road and a bitstream for an object and transmitted.

A data input unit receives point cloud data. For example, point cloud data may include geometry, attribute, parameters about geometry, and/or parameters about attribute.

A coordinate system transformation unit may transform a coordinate system of geometry into a coordinate system appropriate for encoding. Coordinate systems may include an orthogonal coordinate system and an angular coordinate system.

The geometry information transformation quantization processing unit may quantize geometry based on a quantization parameter.

A space split unit may split a space including geometry (point).

The geometry information encoding unit may include a voxelization processing unit, a road/object split unit, a geometry information intra prediction unit, a motion prediction unit, a PU split unit, a motion compensation application unit, and/or a geometry information inter prediction unit.

The voxelization processing unit may voxelize geometry.

The road/object split unit may split a road and an object included in point cloud data according to the method described above. Information about road/object split may be generated and forwarded to a decoder.

The LPU split unit may generate an LPU including a road and/or an LPU including an object.

A frame including point cloud data may include an I-frame and/or a P-frame.

When the frame including the current point cloud data is an I-frame, the geometry information intra prediction unit may generate a prediction value for the geometry data of the point cloud data by referring to the point cloud data included in the frame. A geometry information entropy encoding unit may generate a residual value between the prediction value and geometry, and encode the residual value based on an entropy method.

When the frame including the current point cloud data is a P-frame, the geometry data of the P frame may be encoded through operations of the motion prediction unit, the PU split unit, the motion compensation application unit, and the geometry information intra prediction unit.

The motion prediction unit may predict global motion for geometry within the current frame by referring to a reference frame. Local motion for geometry within the current frame may be predicted by referring to the reference frame.

The PU split unit may split a region that is a prediction unit in the current frame and/or the reference frame. The motion prediction unit may predict global motion for the entire frame, the PU split unit may split a PU, which is a prediction region within the frame, and the motion prediction unit may predict local motion for the PU.

The motion compensation application unit may determine, based on RDO, whether to compensate for motion for geometry within the current frame through global motion and/or local motion. The motion compensation application unit may generate compensated point(s) (geometry) based on global motion and/or local motion. Motion compensation may be used to compress point cloud data with a minimal residual.

The geometry information inter prediction unit may encode compensated points (geometry) according to motion compensation.

The encoder may generate a reference frame for the current frame. The motion compensated reference frame may be generated using a global motion parameter. The motion compensated reference frame may be generated using a global motion parameter and/or a road/object split. A motion compensated point may be generated using a global motion vector.

The encoding/decoding method according to embodiments may encode and decode the geometry by inter-predicting the geometry by using an octree (occupancy tree).

In point cloud data captured by a LiDAR sensor attached to a moving vehicle, a road and an object typically exhibit different movements. A distance between the road and the LiDAR sensor is relatively constant and the road changes only slightly from one vehicle location to a next vehicle location, and thus the movement of the point representing the road relative to the location of the LiDAR sensor is small. On the other hand, an object such as a building, a road sign, vegetation, or other vehicles exhibit greater movement, which differs from the movement of the road.

An object is usually located on the road. However, in some point clouds, such as point clouds acquired when a vehicle crosses a bridge or climbs a road ramp, an object may also exist beneath the road. Embodiments utilize classifying points into roads and objects based on the height of the point (e.g., z-coordinate). The height of the point is compared to two thresholds, bottom_thr and top_thr, where bottom_thr is less than top_thr. A point with a height between two thresholds is classified as a road point, otherwise the point is classified as a point belonging to an object.

After points in the cloud are classified into road and object points, only the object points are considered in a global motion estimation process of the encoder. A global motion parameter includes a translation vector and a rotation matrix.

Global motion is activated by a flag in a geometry parameter set (GPS). When activated, the global motion parameter and two thresholds are signaled.

In the inter prediction process, global motion compensation is applied to a previously reconstructed point cloud frame (e.g., previous frame). Similarly, as in the estimation process, the global motion compensation process classifies points into road and object points based on two thresholds and global motion parameters signaled in the bitstream (GPS). Then, global motion is applied only to an object point, while the road point is predicted statically (zero motion).

The reference frame is used in occupancy coding of the current frame node. The reference node is a co-located node in the reference frame, derived by compensating a prediction frame by using global motion (when activated). When the reference node is obtained, the reference node is split into 8 child nodes having the same size. A point in each child node of the reference node is calculated to form an inter prediction (preOcc) variable. When a child node has one or more points, the corresponding bit (out of 8 bits) of preOcc is configured to 1, otherwise the bit may be configured to 0.

A color conversion processing unit of an attribute information encoding unit may convert the color system included in the attribute.

A recoloring unit may recolor attribute (colors) for the geometry of lost points when the geometry coding type is a lossy type.

An information inter prediction unit may predict attribute data within the current frame by referring to the reference frame for the current frame when a geometry coding type is inter prediction.

An attribute information intra prediction unit may predict attribute data within the current frame based on neighboring values within the current frame when the geometry coding type is intra prediction.

The attribute information entropy encoding unit may encode attribute data based on an entropy method.

FIG. 15 shows a point cloud data decoding device according to embodiments.

FIG. 15 may correspond to the reception device 10004, the receiver 10005, and the point cloud video decoder 10006 of FIG. 1, the transmission-decoding-rendering 20002-20003-20004 of FIG. 2, the decoder of FIG. 7, the reception device of FIG. 9, the device of FIG. 10, the object split-based decoding of FIGS. 11 to 13, the decoder of FIG. 15, the bitstream parsing including parameters of FIGS. 16 to 20, the decoding method of FIG. 22, and the like.

Each component of FIG. 15 may correspond to hardware, software, a processor, and/or a combination thereof.

The input of the decoder is an encoded geometry information (geometry data) bitstream and an attribute information (attribute data) bitstream, and the geometry and attribute data may be decoded to output restored PCC data.

The operation of the decoding device of FIG. 15 may follow a reverse process of the operation of the encoding device of FIG. 14.

A geometry information entropy decoding unit receives a bitstream containing geometry data and decodes the geometry data based on an entropy method.

The road/object split unit may parse information about whether road/object split is performed from the bitstream, and when road/object split is true, the road/object split unit may split points into roads and objects.

The LPU/PU split unit may generate each LPU from the points classified in the road/object split unit, and may configure the LPU by using a road or an object group depending on whether each signaled LPU is a road or an object group.

An LPU split into an object group may include multiple objects. When an LPU including multiple objects has different characteristics for each object, the objects may be split into PUs, and each PU may receive an object ID to use for restoration.

When the geometry coding type is intra, a geometry information intra prediction restoration unit may predict geometry data based on an occupancy tree and/or a prediction tree. Geometry data may be restored by adding the predicted geometry data and the received residual value. A geometry information transformation inverse quantization processing unit may inversely quantize geometry data based on a quantization parameter. A coordinate system inverse transformation unit may inversely transform the coordinate system for geometry data.

When the geometry coding type is inter rather than intra, the motion compensation application unit may predict a motion vector for the geometry data of the current frame and apply motion compensation by referring to a reference frame for the current frame including the geometry data. A geometry information inter prediction restoration unit may restore geometry data. Geometry data may be restored from the received residual values based on the predicted motion vector.

An attribute information decoding unit receives an attribute information bitstream including attribute data. An attribute residual information entropy decoding unit decodes attribute data (residual value) included in the bitstream based on the entropy method.

When the attribute coding type is intra, an attribute information intra prediction restoration unit predicts attribute data within the frame and restores the attribute data by summing the residual value and the residual value. A color inverse conversion processing unit may inversely convert the color system, which is attribute data.

When the attribute coding type is inter, the attribute information intra prediction restoration unit predicts the attribute data by referring to a reference frame for the current frame including the attribute data, and restores the attribute data by summing the residual value and the residual value.

FIG. 16 illustrates a bitstream including point cloud data according to embodiments.

The point cloud data transmission method/device according to embodiments (the transmission device 10000, the point cloud video encoder 10002, and the transmitter 10003 of FIG. 1, the acquisition-encoding-transmission 20000-20001-20002 of FIG. 2, the encoder of FIGS. 3 and 8, each device of FIG. 10, the object split-based encoding of FIGS. 11 to 13, the encoder of FIG. 14, the encoding method of FIG. 21, and the like) may encode point cloud data, generate parameter information for the point cloud data, and generate and transmit a bitstream including the encoded point cloud data and/or the parameter information, as shown in FIG. 16.

The point cloud data reception method/device according to embodiments (the reception device 10004, the receiver 10005, and the point cloud video decoder 10006 of FIG. 1, the transmission-decoding-rendering 20002-20003-20004 of FIG. 2, the decoder of FIG. 7, the reception device of FIG. 9, the device of FIG. 10, the object split-based decoding of FIGS. 11 to 13, the decoder of FIG. 15, the decoding method of FIG. 22, and the like) may receive a bitstream, parse parameter information, and decode point cloud data based on the parameter information, as shown in FIG. 16.

Hereinafter, definition of information included in the bitstream of FIG. 16 is explained with reference to each drawing.

The encoded point cloud configuration is as follows. A point cloud data encoder that performs geometry encoding and/or attribute encoding may generate an encoded point cloud (or a bitstream including a point cloud) as follows. Signaling information about point cloud data may be generated and processed by a metadata processing unit of the point cloud data transmission device and included in the point cloud as follows.

Each abbreviation stands for. Each abbreviation may be referred to by other terms within the same meaning: SPS: Sequence Parameter Set, GPS: Geometry Parameter Set, APS: Attribute Parameter Set, TPS: Tile Parameter Set, Geometry: Geometry bitstream = geometry slice header + [geometry PU header + geometry PU data] | geometry slice data, and Attr: Attribute bitstream = attribute data unit header + [attribute PU header + attribute PU data] | attribute data unit data.

A slice is a unit of encoding/decoding. The slice may be referred to as a data unit. The slice (data unit) may include a header and a payload (data).

The method according to embodiments may add motion option information for road/object split to GPS, TPS, and the like.

The method according to embodiments may add motion option information for road/object split to the TPS or the geometry data header for each slice.

The bitstream provides a tile, or a slice, that allows the point cloud to be divided into regions and processed.

The embodiments may provide a selection method with low complexity and somewhat low reliability of results, or conversely, high complexity but high reliability, by configuring different options for generating sets of neighboring points for each region when the point cloud is divided for each region through the bitstream of FIG. 16. The option may be configured differently depending on the processing capacity of the receiver.

Therefore, when a point cloud is divided into tiles, different options may be applied to each tile. When a point cloud is divided into slices, different options may be applied to each slice. Embodiments may add a geometry PU to a bitstream, a geometry PU header, and geometry PU data.

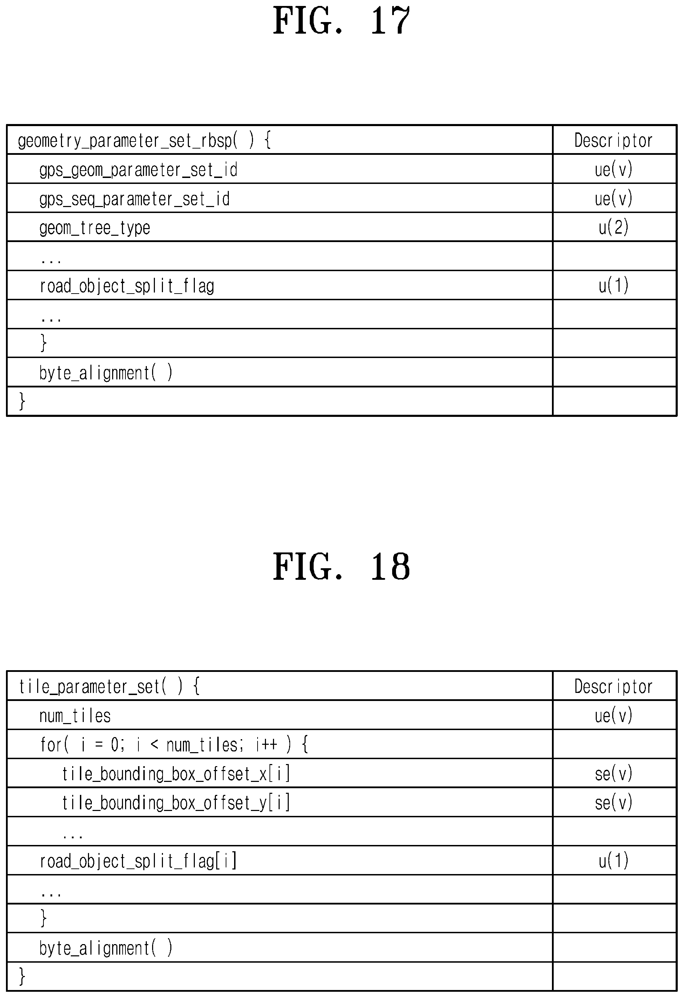

FIG. 17 shows a set of geometry parameters according to embodiments.

The method according to embodiments may add motion option information related to point road/object split for encoding/decoding geometry information to GPS.

Geometry parameter set ID (gps_geom_parameter_set_id): Indicates a GPS identifier that may be referenced by other syntax elements. A value of gps_seq_parameter_set_id is in the range 0 to 15.

Sequence Parameter Set ID (gps_seq_parameter_set_id): Indicates a value of sps_seq_parameter_set_id for an active SPS. A value of gps_seq_parameter_set_id is in the range 0 to 15.

Geometry tree type (geom_tree_type): When geom_tree_type is 0, this indicates that the location information is coded using an octree (occupancy tree). When geom_tree_type is 1, this indicates that the location information is coded using a prediction tree.

Road Object Split Flag (road_object_split_flag): Indicates whether road/object splitting is applied to the frame.

FIG. 18 shows a tile parameter set according to embodiments.

The method according to embodiments may add option information related to road/object split to the TPS. This allows efficient signaling of inter prediction.

The number of tiles (num_tiles) indicates the number of tiles signaled for a bitstream. When there are no tile, num_tiles is inferred to be 0.

Tile bounding box offset X (tile_bounding_box_offset_x[i]) represents an x-offset of an i-th tile in Cartesian coordinates. When there is no tile, a value of tile_bounding_box_offset_x[0] is inferred as sps_bounding_box_offset_x.

Tile bounding box offset Y (tile_bounding_box_offset_y[i]) represents an y-offset of an i-th tile in Cartesian coordinates. When there is no tile, a value of tile_bounding_box_offset_y[0] is inferred as sps_bounding_box_offset_y.

Road object split flag (road_object_split_flag[i]): Indicates whether road/object split is performed on the tile.

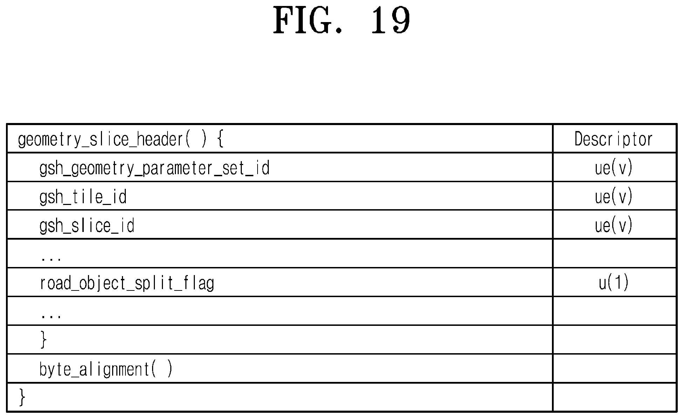

FIG. 19 illustrates a geometry slice header according to embodiments.

The encoding method according to embodiments may add motion option information related to point road/object split header when encoding geometry information to a geometry data header and signal the information. This allows efficient signaling for inter prediction support.

Geometry parameter set ID (gsh_geometry_parameter_set_id) represents a value of gps_geom_parameter_set_id of an active GPS.

Tile ID (gsh_tile_id) represents a tile ID value referenced in GSH.

Slice ID (gsh_slice_id) indicates a slice header to be referenced by other syntax elements.

Road Object Split Flag (road_object_split_flag): Indicates whether roads and objects applied to the slice are split.

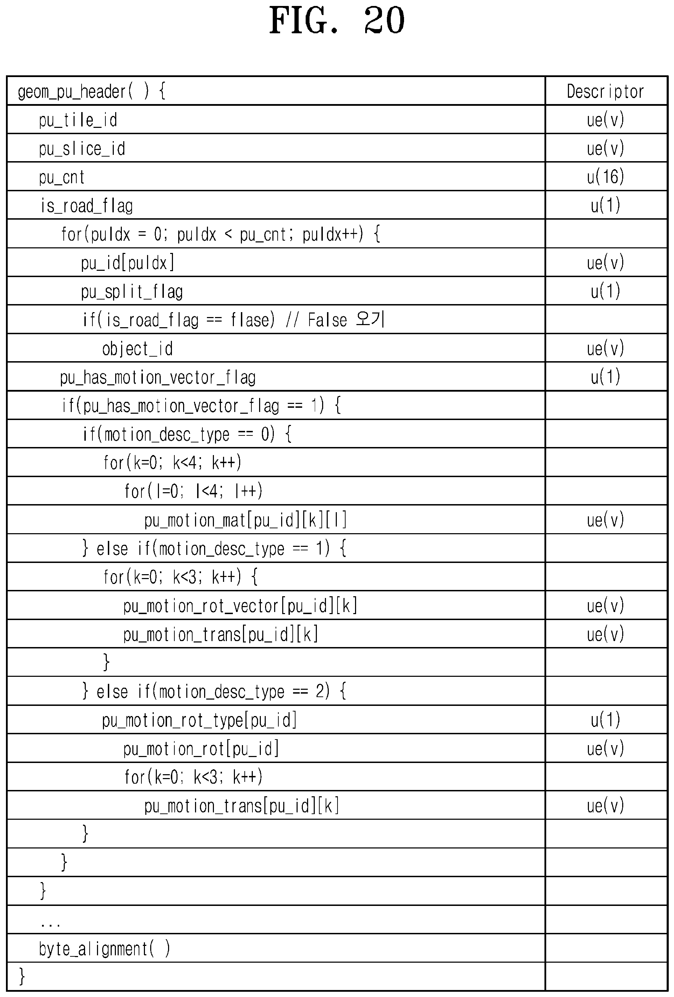

FIG. 20 illustrates a geometry prediction unit header according to embodiments.

The encoding method according to embodiments may signal object split information of an LPU/PU related to inter prediction by including the information in a geometry PU header. This allows efficient signaling for inter prediction support.

Tile ID (pu_tile_id): Indicates a tile ID to which a PU belongs.

Slice ID (pu_slice_id): Indicates a slice ID to which a PU belongs.

PU count (pu_cnt): Indicates the number of PUs included in a slice.

PU ID (pu_id): Indicates a PU ID.

PU split flag (pu_split_flag_: Indicates whether a PU block is further split.

PU motion vector flag (pu_has_motion_vector_flag): Indicates whether a PU block has a motion vector.

PU motion matrix (pu_motion_mat[][][]): Represents a motion matrix applied to a PU block.

PU motion rotation vector (pu_motion_rot_vector[][]): Represents a motion rotation vector applied to a PU block.

PU motion transfer (pu_motion_trans [][]): Represents a motion transfer vector applied to a PU block.

PU motion rotation type (pu_motion_rot_type[]): Indicates a motion rotation value type applied to a PU block. For example, it may be expressed as 0 = radian, and 1 = degree.

PU motion rotation (pu_motion_rot[]): Indicates a motion rotation value applied to a PU block. The rotation axis may be configured to rotate about a road normal vector.

Road flag (is_road_flag): Indicates whether a point included in an LPU block is a road or an object.

Object ID (object_id): Indicates an object ID of a point included in a PU block.

A decoder may decode data about a road and an object that are split into LPU units. For example, a prediction tree may be generated from a road LPU, and a prediction tree may be generated from an object LPU.

FIG. 21 illustrates a point cloud data encoding method according to embodiments.

The point cloud data encoding method according to embodiments may include encoding point cloud data (S2100).

The point cloud data encoding method according to embodiments may further include transmitting a bitstream including the point cloud data (S2101).

Referring to FIG. 14, with respect to a PCC encoder, the encoding point cloud data (S2100) may include encoding geometry data of the point cloud data and encoding attribute data of the point cloud data.

Referring to FIGS. 11 and 12, the encoding geometry data (S2100) may include separating a road and an object in the point cloud data, predicting the point cloud data for the road based on a prediction unit including the road, and predicting the point cloud data for the object based on a prediction unit including the object, and the attribute data may include a normal vector.

In relation to the road/object split method, a point of geometry data may be separated into at least one of a road or an object based on a normal vector, an axis direction of point cloud data, or a threshold value.

Referring to FIGS. 16 and 17, with respect to GPS, the bitstream may further include a set of geometry parameters, and the set of geometry parameters may include information indicating whether roads and objects within the point cloud data are split.

Referring to FIG. 18, with respect to TPS, the bitstream may further include a set of tile parameters, and the set of tile parameters may include information indicating whether roads and objects within the point cloud data are split.

The point cloud data encoding method of FIG. 21 may be performed by a point cloud data encoding device. A point cloud data encoding device may include, as shown in FIG. 14, an encoder configured to encode point cloud data, and a transmission unit configured to transmit a bitstream including the point cloud data.

FIG. 22 illustrates a point cloud data decoding method according to embodiments.

The decoding method of FIG. 22 may follow a reverse process of the encoding method of FIG. 21.

The point cloud data decoding method according to embodiments may include receiving a bitstream including the point cloud data (S2200).

The point cloud data decoding method according to embodiments may further include decoding the point cloud data (S2201).

Referring to FIG. 15, the decoding point cloud data (S2201) may include decoding geometry data of the point cloud data and decoding attribute data of the point cloud data.

Referring to FIGS. 11 and 12, in relation to road/object split and PU configuration, the decoding geometry data (S2201) may include separating roads and objects in the point cloud data, restoring the point cloud data for the road based on a prediction unit including the road, and restoring the point cloud data for the object based on a prediction unit including the object, and the attribute data may include a normal vector.

Referring to FIGS. 16 and 17, with respect to GPS, the bitstream may further include a set of geometry parameters, and the set of geometry parameters may include information indicating whether roads and objects within the point cloud data are split.

Referring to FIG. 18, with respect to TPS, the bitstream may further include a set of tile parameters, and the set of tile parameters may include information indicating whether roads and objects within the point cloud data are split.

Referring to FIG. 19, with respect to GDU, the bitstream may further include a geometry data header, and the geometry data header may include information indicating whether roads and objects within the point cloud data are split.

Referring to FIG. 20, with respect to the GPU, the bitstream may further include a geometry prediction unit header, and the geometry prediction unit header may include at least one of information indicating whether a road and an object in the point cloud data are split or identification information indicating an object.

The point cloud data decoding method of FIG. 22 may be performed by the point cloud data decoding device. Referring to FIG. 15, the point cloud data decoding device may include a receiving unit configured to receive a bitstream including point data, and a decoder configured to decode the point data.

The encoding/decoding point cloud data encoding/decoding method and device according to embodiments provide the following effects.

In a scenario in which one frame is captured and stored using LiDAR equipment on a moving vehicle, there may be continuity between frames, and thus compression may be performed efficiently using an inter prediction scheme. The motion characteristics of the captured road and object point clouds are different, and thus to efficiently apply the inter prediction scheme, the road and the object are split and the motion is predicted for each quickly and accurately, which may affect a compression time. In addition, by increasing the efficiency of the inter prediction scheme through accurate prediction, the bitstream size may be reduced. Inaccurate motion prediction may significantly increase bitstream size, which may reduce compression efficiency.

Therefore, embodiments may provide a method for quickly and accurately predicting motion by using characteristics captured by LiDAR equipment in a moving vehicle.

The embodiments may provide a road/object split method to support efficient geometry compression of content captured via LiDAR equipment on a moving vehicle.

Thus, the embodiments may provide a point cloud content stream by increasing the inter-geometry compression efficiency of an encoder/decoder of geometry-based point cloud compression (G-PCC) for compressing 3D point cloud data.

Accordingly, the transmission method/device according to the embodiments may efficiently compress point cloud data to transmit the data, and by forwarding signaling information therefor, the reception method/device according to the embodiments may also efficiently decode/restore point cloud data.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### Mode for Disclosure

As described above, related details have been described in the best mode for carrying out the embodiments.

### Industrial Applicability

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

### Claims

**1.** A method of decoding point cloud data, the method comprising:

　　receiving a bitstream including point data; and

decoding the point data.

2.  The method of claim 1, wherein decoding of the point cloud data comprises:

    decoding geometry data of the point cloud data; and
    decoding attribute data of the point cloud data.

3.  The method of claim 2, wherein the decoding of the geometry data comprises:

    separating a road and an object within the point cloud data;
    based on a prediction unit including the road, restoring point cloud data for the road; and
    based on a prediction unit including the object, restoring point cloud data for the object,
    wherein the attribute data includes a normal vector.

4.  The method of claim 1, wherein the bitstream further includes a set of geometry parameters, and
    the set of geometry parameters includes information indicating whether a road and an object within the point cloud
    data are split.

5.  The method of claim 1, wherein the bitstream further includes a set of tile parameters, and
    the set of tile parameters includes information indicating whether a road and an object within the point cloud data are
    split.

6.  The method of claim 1, wherein the bitstream further includes a geometry data header, and
    the geometry data header includes information indicating whether a road and an object within the point cloud data are
    split.

7.  The method of claim 1, wherein the bitstream further includes a geometry prediction unit header, and
    the geometry prediction unit header includes at least one of information indicating whether a road and an object in the
    point cloud data are split or identification information indicating the object.

8.  A device for decoding point cloud data, the device comprising:

    a receiving unit configured to receive a bitstream including point data; and
    a decoder configured to decode the point data.

9.  A method of encoding point cloud data, the method comprising:

    encoding the point cloud data; and
    transmitting a bitstream including the point cloud data.

10. The method of claim 1, wherein the encoding of the point cloud data comprises:

    encoding geometry data of the point cloud data; and
    encoding attribute data of the point cloud data.

11. The method of claim 10, wherein the encoding of the geometry data comprises:

    separating a road and an object within the point cloud data;
    based on a prediction unit including the road, predicting point cloud data for the road; and
    based on a prediction unit including the object, predicting point cloud data for the object,
    wherein the attribute data includes a normal vector.

12. The method of claim 11, wherein, based on the normal vector, an axis direction of the point cloud data, or a threshold
    value, a point of the geometry data is separated into at least one of a road or an object.

13. The method of claim 10, wherein the bitstream further includes a set of geometry parameters, and
    the set of geometry parameters includes information indicating whether a road and an object within the point cloud
    data are split.

14. The method of claim 10, wherein the bitstream further includes a set of tile parameters, and the set of tile parameters includes information indicating whether a road and an object within the point cloud data are split.

15. A device for encoding point cloud data, the device comprising:

an encoder configured to encode the point cloud data; and
a transmitting unit configured to transmit a bitstream including the point cloud data.

# FIG. 1

# FIG. 2

Acquisition (20000) → [Ply file -geometry -attribute] → Encoding (20001) → [Encoded -geometry -attribute bitstream] → Transmission (20002) → Decoding (20003) → [Decoded -geometry -attribute] → Rendering (20004)

Feedback (20005)

Head orientation information, viewport information

Head orientation information, viewport information

EP 4 787 022 A1

# FIG. 3

positions                                    attributes

30000 — Transform<br>coordinates        Transform colors — 30006

30001 — Quantize and remove<br>points (voxelize)     Transfer attributes — 30007

30005 —

30002 — Analyze octree     Reconstruct geometry     RAHT     Gnnerate<br>LOD — 30009

— 30008

30003 — Analyze surface<br>approximation          Lifting — 30010

Quantize coefficients — 30011

30004 — Arithmetic encode     Arithmetic encode — 30012

geometry bitstream                      atribute bitstream

# FIG. 4

FIG. 5

Level of details

# FIG. 6

Original order | P0, P1, P2, P3, P4, P5, P6, P7, P8, P9

LOD-based order | P0, P5, P4, P2, | P1, P6, P3 | P9, P8, P7

LOD0

LOD1

LOD2

# FIG. 7

geomerty
bitstream

attributes
bitstream

7000 — Arithmerix decode

7005 — Arithmerix decode

7001 — Synthesize octree

7006 — Inverse quantize

7002 — synthesize surface approximation

7003 — Reconstruct geometry

RAHT

7008 — Gnnerate LOD

7007 — RAHT

7009 — Inverse lifting

7004 — Inverse transform coordinates

7010 — Inverse transform colors

position

attributes

# FIG. 8

EP 4 787 022 A1

# FIG. 9

Reception

9000 — Receiver

9001 — Reception processor

9006

Geometry bitstream | Attribute bitstream

Set value, etc.

9002 — Arithmetic decoder — Metadata parser — Arithmetic decoder — 9007

9003 — Occupancy code-based octree reconstruction processor | Inverse quantization processor — 9008

9004 — Surface model processor (triangle reconstruction, up-sampling, voxelization) | Prediction /lifting/RAHT inverse transform processor — 9009

9005 — Inverse quantization processor | Color inverse transform processor — 9010

Sharing reconstructed position values

Renderer — 9011

# FIG. 10

FIG. 11

(a)

(b)

# FIG. 12

```
format ascii 1.0
element vertex 10265
property float32 x
property float32 y
property float32 z
property uint16 reflectance
property float32 nx
property float32 ny
property float32 nz
element face 0
property list uint8 int32 vertex_index
end_header
-34.000000 -76.000000 0.000000 15 -0.000000 0.000000 -1.000000
-44.000000 -70.000000 0.000000 15 -0.000000 0.000000 -1.000000
-38.000000 -73.000000 0.000000 15 -0.000000 0.000000 -1.000000
-33.000000 -76.000000 0.000000 15 -0.000000 0.000000 -1.000000
-45.000000 -70.000000 0.000000 15 -0.000000 0.000000 -1.000000
```

# FIG. 13

FIG. 14

Data input unit
(geometry, attribute, parameters)

Coordinate system transformation unit

Geometry information transformation
quantization processing unit

Space split unit

Voxelization processing unit

Road/object split unit — Whether road and object are split

-Whether road and object are split
-Reference normal vectors
- threshold

Whether road or object

LPU split unit

Type of frame — P-Frame

I-Frame

Geometry information
intra prediction unit

Geometry information
entropy encoding unit

Geometry information bitstream

Geometry information
encoding unit

Motion prediction unit

PU split unit

Motion compensation application unit

Geometry information
inter prediction unit

Reference
frame buffer

Restored geometry information

Attribute information
encoding unit

Color conversion processing unit

Lossy-Geom? — No — Recoloring unit

No

Geom inter-
prediction? — No — Attribute information
inter prediction unit

Yes

Attribute information
intra prediction unit

Restored attribute information

Attribute information entropy encoding unit

EP 4 787 022 A1

FIG. 15

Geometry information bitstream

**Geometry information decoding unit**

Geometry information entropy decoding unit

Road/object split unit
- Whether road and object are split

LPU split unit
- Whether road or object

Geom Intra coding? — No / Yes

Motion compensation application unit

Geometry information inter prediction restoration unit

Reference frame

Buffer

Geometry information intra prediction restoration unit

Geometry information transformation inverse quantization processing unit

Restored geometry information

Coordinate system inverse transformation unit

Geometry information

Geometry information bitstream

**Attribute information decoding unit**

Restored attribute information — No

Attr Intra coding? — No / Yes

Attribute information intra prediction unit

Attribute information inter prediction unit

Restored attribute information

Color inverse conversion processing unit

Attribute information

EP 4 787 022 A1

# FIG. 16

| S P S | G P S | A P S 0 | A P S 1 | T P S | Slice0 | | | | | | | | | |
|---|---|---|---|---|---|---|---|---|---|---|---|---|---|---|
| | | | | | Geom0 | | | | | Attr0 | | | Attr1 | ... |
| | | | | | Geom slice header | Geom PU0 header | | Geom PU1 | ... | Attr slice header | Attr PU0 header | Attr PU0 | ... | |
| | | | | | | Geom PU Header | Geom PU data | | | | Attr PU Header | Attr PU data | | | |

# FIG. 17

| geometry_parameter_set_rbsp( ) { | Descriptor |
|---|---|
| gps_geom_parameter_set_id | ue(v) |
| gps_seq_parameter_set_id | ue(v) |
| geom_tree_type | u(2) |
| ... | |
| road_object_split_flag | u(1) |
| ... | |
| } | |
| byte_alignment( ) | |
| } | |

# FIG. 18

| tile_parameter_set( ) { | Descriptor |
|---|---|
| num_tiles | ue(v) |
| for( i = 0; i < num_tiles; i++ ) { | |
| tile_bounding_box_offset_x[i] | se(v) |
| tile_bounding_box_offset_y[i] | se(v) |
| ... | |
| road_object_split_flag[i] | u(1) |
| ... | |
| } | |
| byte_alignment( ) | |
| } | |

# FIG. 19

| geometry_slice_header( ) {        | Descriptor |
|-----------------------------------|------------|
|    gsh_geometry_parameter_set_id | ue(v)      |
|    gsh_tile_id    | ue(v)      |
|    gsh_slice_id   | ue(v)      |
|    ...             |            |
|    road_object_split_flag | u(1)       |
|    ...             |            |
|    }               |            |
|    byte_alignment( ) |          |
| }                                 |            |

# FIG. 20

| geom_pu_header( ) { | Descriptor |
|---|---|
| pu_tile_id | ue(v) |
| pu_slice_id | ue(v) |
| pu_cnt | u(16) |
| is_road_flag | u(1) |
|   for(puIdx = 0; puIdx < pu_cnt; puIdx++) { | |
|     pu_id[puIdx] | ue(v) |
|     pu_split_flag | u(1) |
|     if(is_road_flag == flase) // False 오기 | |
|       object_id | ue(v) |
|     pu_has_motion_vector_flag | u(1) |
|     if(pu_has_motion_vector_flag == 1) { | |
|     if(motion_desc_type == 0) { | |
|     for(k=0; k<4; k++) | |
|       for(l=0; l<4; l++) | |
|         pu_motion_mat[pu_id][k][l] | ue(v) |
|     } else if(motion_desc_type == 1) { | |
|     for(k=0; k<3; k++) { | |
|       pu_motion_rot_vector[pu_id][k] | ue(v) |
|       pu_motion_trans[pu_id][k] | ue(v) |
|     } | |
|     } else if(motion_desc_type == 2) { | |
|     pu_motion_rot_type[pu_id] | u(1) |
|     pu_motion_rot[pu_id] | ue(v) |
|     for(k=0; k<3; k++) | |
|       pu_motion_trans[pu_id][k] | ue(v) |
|     } | |
|     } | |
|   } | |
|   ... | |
|   byte_alignment( ) | |
| } | |

# FIG. 21

Encode point cloud data — S2100

Transmitting bitstream
including point cloud data — S2101

# FIG. 22

Receive bitstream
including point cloud data — S2200

Decode point cloud data — S2201

## INTERNATIONAL SEARCH REPORT

| International application No. |
|---|
| **PCT/KR2024/014630** |

### A. CLASSIFICATION OF SUBJECT MATTER

**G01S 17/894**(2020.01)i; **G01S 17/931**(2020.01)i; **G06V 20/56**(2022.01)i; **G06T 7/60**(2006.01)i

According to International Patent Classification (IPC) or to both national classification and IPC

### B. FIELDS SEARCHED

Minimum documentation searched (classification system followed by classification symbols)

G01S 17/894(2020.01); G06T 15/00(2006.01); G06T 17/00(2006.01); G06T 9/00(2006.01); G06T 9/40(2006.01); H04N 19/103(2014.01); H04N 19/597(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 디코딩(decoding), 인코딩(encoding), 지오메트리 (geometry), 어트리뷰트(attribute)

### C. DOCUMENTS CONSIDERED TO BE RELEVANT

| Category* | Citation of document, with indication, where appropriate, of the relevant passages | Relevant to claim No. |
|---|---|---|
| X | WO 2022-025552 A1 (LG ELECTRONICS INC. et al.) 03 February 2022 (2022-02-03) See paragraphs [0005], [0356] and [0377] and claims 2 and 15. | 1-2,8-10,15 |
| Y | | 4-6,13-14 |
| A | | 3,7,11-12 |
| Y | WO 2021-045601 A1 (LG ELECTRONICS INC. et al.) 11 March 2021 (2021-03-11) See claims 4-5 and 19-20. | 4-6,13-14 |
| A | KR 10-2021-0057161 A (HUAWEI TECHNOLOGIES CO., LTD.) 20 May 2021 (2021-05-20) See paragraphs [0049]-[0115] and claims 1 and 10. | 1-15 |
| A | WO 2020-189903 A1 (LG ELECTRONICS INC. et al.) 24 September 2020 (2020-09-24) See paragraphs [0144] and [0879]. | 1-15 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 January 2025** | **13 January 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/014630**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0144880 A (TENCENT AMERICA LLC) 30 November 2021 (2021-11-30)<br>See paragraphs [0008] and [0151]. | 1-15 |

Form PCT/ISA/210 (second sheet) (July 2022)

EP 4 787 022 A1

## INTERNATIONAL SEARCH REPORT
### Information on patent family members

International application No.

**PCT/KR2024/014630**

| Patent document cited in search report | | | Publication date (day/month/year) | Patent family member(s) | | | Publication date (day/month/year) |
|---|---|---|---|---|---|---|---|
| WO | 2022-025552 | A1 | 03 February 2022 | US | 2023-0394712 | A1 | 07 December 2023 |
| WO | 2021-045601 | A1 | 11 March 2021 | US | 2022-0383552 | A1 | 01 December 2022 |
| KR | 10-2021-0057161 | A | 20 May 2021 | CN | 112690002 | A | 20 April 2021 |
| | | | | CN | 112690002 | B | 02 June 2023 |
| | | | | CN | 113016184 | A | 22 June 2021 |
| | | | | CN | 113016184 | B | 07 July 2023 |
| | | | | CN | 116708799 | A | 05 September 2023 |
| | | | | CN | 116847105 | A | 03 October 2023 |
| | | | | EP | 3841750 | A1 | 30 June 2021 |
| | | | | EP | 3844963 | A1 | 07 July 2021 |
| | | | | JP | 2021-536204 | A | 23 December 2021 |
| | | | | JP | 2022-500931 | A | 04 January 2022 |
| | | | | JP | 2023-123508 | A | 05 September 2023 |
| | | | | JP | 7130853 | B2 | 05 September 2022 |
| | | | | KR | 10-2021-0057143 | A | 20 May 2021 |
| | | | | KR | 10-2589477 | B1 | 13 October 2023 |
| | | | | US | 11979605 | B2 | 07 May 2024 |
| | | | | US | 2021-0201539 | A1 | 01 July 2021 |
| | | | | US | 2021-0203989 | A1 | 01 July 2021 |
| | | | | US | 2024-0283974 | A1 | 22 August 2024 |
| | | | | WO | 2020-055865 | A1 | 19 March 2020 |
| | | | | WO | 2020-055869 | A1 | 19 March 2020 |
| WO | 2020-189903 | A1 | 24 September 2020 | KR | 10-2021-0132200 | A | 03 November 2021 |
| | | | | KR | 10-2023-0141897 | A | 10 October 2023 |
| | | | | KR | 10-2024-0095364 | A | 25 June 2024 |
| | | | | KR | 10-2585498 | B1 | 06 October 2023 |
| | | | | KR | 10-2677294 | B1 | 21 June 2024 |
| | | | | US | 11968393 | B2 | 23 April 2024 |
| | | | | US | 2022-0141487 | A1 | 05 May 2022 |
| | | | | US | 2024-0323435 | A1 | 26 September 2024 |
| KR | 10-2021-0144880 | A | 30 November 2021 | AU | 2021-246918 | A1 | 07 October 2021 |
| | | | | AU | 2021-246918 | B2 | 02 March 2023 |
| | | | | CA | 3137933 | A1 | 07 October 2021 |
| | | | | CA | 3137933 | C | 19 March 2024 |
| | | | | CN | 113796014 | A | 14 December 2021 |
| | | | | CN | 113796014 | B | 03 November 2023 |
| | | | | EP | 4128540 | A1 | 08 February 2023 |
| | | | | JP | 2022-530765 | A | 01 July 2022 |
| | | | | JP | 7330291 | B2 | 21 August 2023 |
| | | | | US | 11317117 | B2 | 26 April 2022 |
| | | | | US | 11812058 | B2 | 07 November 2023 |
| | | | | US | 2021-0306664 | A1 | 30 September 2021 |
| | | | | US | 2022-0210472 | A1 | 30 June 2022 |
| | | | | WO | 2021-202003 | A1 | 07 October 2021 |

Form PCT/ISA/210 (patent family annex) (July 2022)

50